# EUROPÄISCHE PATENTANMELDUNG

(11) **EP 4 745 419 A2**
(43) Veröffentlichungstag der Anmeldung: **20.05.2026**
(21) Anmeldenummer: 26168567.1
(22) Anmeldetag: 10.05.2022
(51) Int. Cl.: F16C 17/03

(54) **GLEITLAGERSEGMENT FÜR EIN GLEITLAGER UND GLEITLAGER**

(30) Priorität: 08.06.2021 DE 102021205737
(62) Teilanmeldung aus: 22728521.0
(71) Anmelder: Siemens Energy Global GmbH & Co. KG, 81739 München (DE)
(72) Erfinder: Hofmann, Andreas, 79793 Horheim (DE); Wilm, Dennis, 45131 Essen (DE); Yadav, Anuj Kumar, 110052 New Delhi (IN)

(57) **Zusammenfassung**

Die Erfindung betrifft ein Gleitlagersegment (1^{I}) für ein Gleitlager, das eine Kunststoffplatte aufweist, sowie Verstärkungselemente (10, 13) oder Stützungselemente.

## Beschreibung

Die Erfindung betrifft ein Gleitlagersegment aus oder mit Kunststoff für ein Gleitlager, bei dem insbesondere PEEK verwendet wird, welches noch verstärkt und/oder arretiert werden muss, um höheren mechanischen Belastungen gerecht zu werden.

Ein solches Axiallager ist z.B. in US 10,107,079 beschrieben.

Polyether-Ether-Ketone (PEEK) sind thermoplastische Polymere, welche gegenüber einer Babbitt/Weißmetall-Beschichtung höhere Belastungen erlauben.

Jedoch weist Kunststoff oder PEEK für schwerere Rotoren oder bei höheren mechanischen Belastungen ein zu geringes elastisches Modul auf, sodass es zu größeren Verformungen kommen kann und Kunststoff nicht eingesetzt werden kann.

Es ist daher Aufgabe der Erfindung oben genanntes Problem zu lösen.

Die Aufgabe wird gelöst durch ein Gleitlagersegment gemäß Anspruch 1 und einem Gleitlager gemäß Anspruch 11.

In den Unteransprüchen sind weitere vorteilhafte Maßnahmen aufgelistet, die beliebig miteinander kombiniert werden können, um weiter Vorteile zu erzielen.

Es zeigen die
- Figuren 1, 2: ein Gleitlagersegment für ein Gleitlager,
- Figuren 3 - 5: einen modularen Aufbau einer Platte für Gleitlager sowie
- Figuren 6 - 8: weitere Befestigungen oder Verstärkungsmechanismen für ein Gleitlagersegment.

Die Beschreibung und die Figuren stellen nur Ausführungsbeispiele der Erfindung dar.

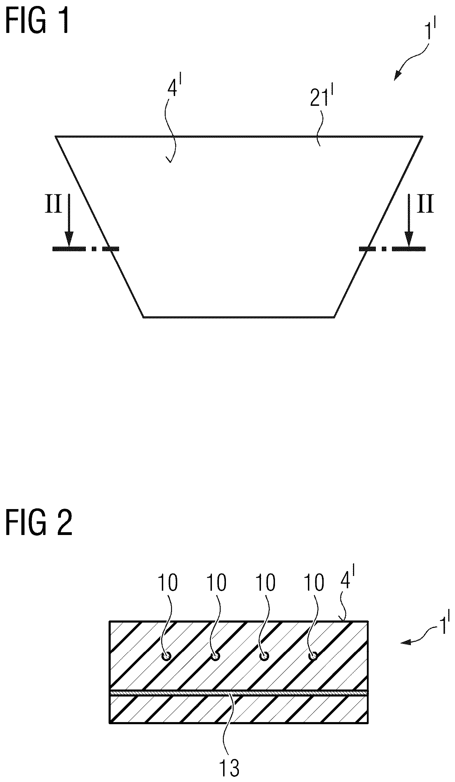

Figur 1 zeigt eine Aufsicht auf ein massives Gleitlagersegment 1^{I} aus einem Kunststoff, das für ein Gleitlager verwendet wird.

Insbesondere wird für den Kunststoff PEEK verwendet.

Die Oberfläche 4' stellt die äußere Kontaktfläche für das Gleitlager dar.

Das Gleitlagersegment 1^{I} stellt gemäß Aufsicht oder im Querschnitt vorzugsweise ein Trapez dar oder ist trapezförmig ausgebildet.

Andere typische Geometrien und Formen von Gleitlagersegmenten sind ebenso möglich. Figur 2 zeigt einen Querschnitt entlang der Linie II der Figur 1.

Zu erkennen ist, dass in der einen Richtung (senkrecht zur Zeichnungsebene) vorzugsweise mehrere Längs-Verstärkungsstäbe 10 als Verstärkungselemente in einer Ebene (aber auch in mehreren Ebenen möglich) vorhanden sind.

Quer dazu (in der Zeichnungsebene), insbesondere rechtwinklig dazu, sind weitere Quer-Verstärkungsstäbe 13 als Verstärkungselemente vorhanden, die zusammen mit den Längs-Verstärkungsstäben 10 das elastische Modul des Gleitlagersegment 1^{I} im Kunststoff erhöhen.

Ebenso vorzugsweise sind hier mehrere Quer-Verstärkungsstäbe 13 in einer Ebene angeordnet (in dieser Schnittdarstellung nicht sichtbar).

Ebenso können mehrere Ebenen von Quer- und Längs-Verstärkungselemente im Gleitlagersegment 1^{I} vorhanden sein.

Weitere Anordnungen von Quer und/oder Längs-Verstärkungsstäben 10, 13 sind denkbar.

Die Verstärkungsstäbe 10, 13 erstrecken sich vorzugsweise über die gesamte Breite, Länge oder Höhe des Gleitlagersegments 1^{I}, wie hier für das Quer-Verstärkungselement 13 gezeigt.

Die Verstärkungsstäbe 10, 13 können nachträglich in den Kunststoff oder in eine massive Kunststoffplatte eingebracht werden oder werden direkt bei der Herstellung integriert, insbesondere mit eingegossen, umspritzt, ... und bilden so das Gleitlagersegment 1^{I}.

Die Verstärkungsstäbe 10, 13 als Verstärkungselemente sind nicht miteinander verwoben.

Die Verstärkungsstäbe 10, 13 als Verstärkungselemente sind vorzugweise aus Stahl.

Die Verstärkungsstäbe 10, 13 weisen vorzugsweise einen Durchmesser von 1mm bis 2mm auf.

Die Kunststoffplatte 21^{I} ist vorzugsweise aus PEEK.

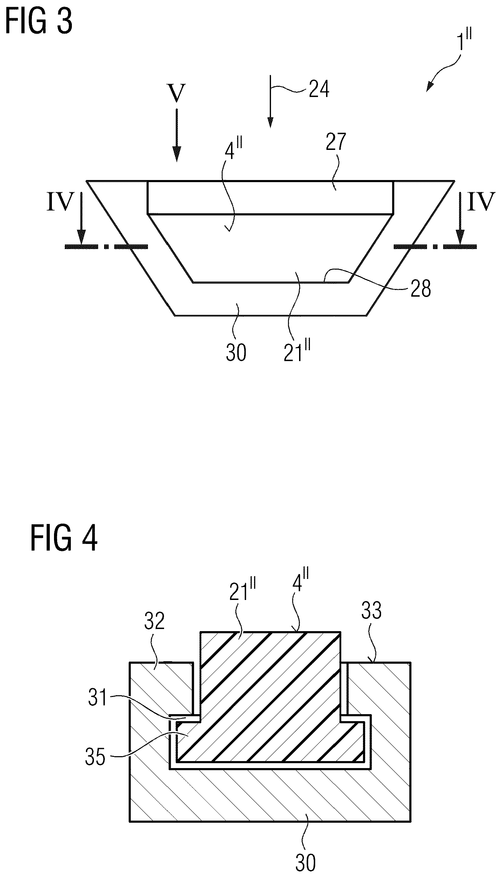

Figur 3 zeigt eine weitere Aufsicht auf ein Gleitlagersegment 1^{II}, das modular aufgebaut ist.

In einem vorzugsweise plattenförmigen Stützkörper 30 ist eine Kunststoffplatte 21^{II} gehalten.

Die Kunststoffplatte 21^{II} wird entlang einer Einschubrichtung 24 über einen abgesenkten Bereich 27, einer Einführungsöffnung, in den Stützkörper 30 eingeführt.

Der Stützkörper 30 weist auf einer Seite in seiner Mitte eine Vertiefung auf, in der die Kunststoffplatte 21^{III} angeordnet ist.

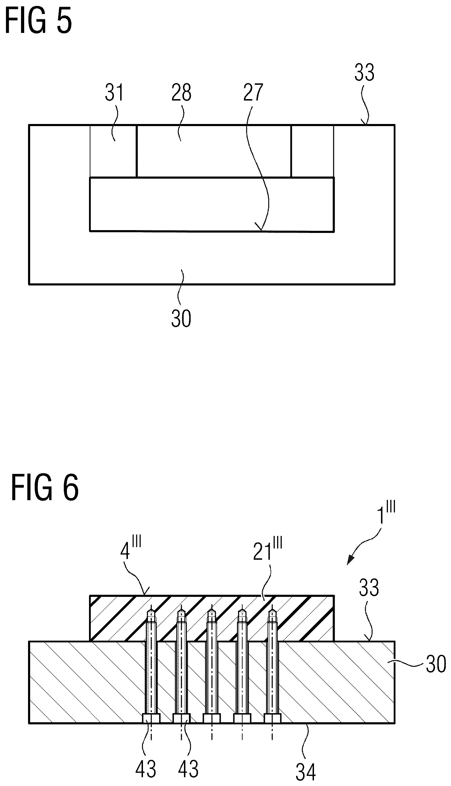

Die Kunststoffplatte 21^{II} liegt dann in der Vertiefung an einer Hinterseite 28 an (Fig. 4, 5).

Die Kunststoffplatte 21^{II} wird in geeigneter Weise formschlüssig an hier vorzugsweise drei Seiten gehalten (Fig. 3, 7, 8).

Der Stützkörper 30 ist vorzugsweise aus Stahl.

Der Stützkörper 30 ist ebenfalls vorzugsweise wie die Kunststoffplatte 21^{II} trapezförmig ausgebildet.

Andere typische Geometrien und Formen von Gleitlagersegmenten sind ebenso möglich.

Die Kunststoffplatte 21^{II} ist vorzugsweise aus PEEK.

Die Befestigung der Kunststoffplatte 21^{II} kann durch eine Hinterschneidung 31 in dem Stützkörper 30 gemäß Figur 4 ausgebildet sein, wobei die Hinterschneidung 31 einen entsprechenden Vorsprung 32 als Teil des Stützkörpers 30 bedingt und aufweist.

Komplementär dazu weist die Kunststoffplatte 21^{II} an ihrem Boden gegenüber der Oberfläche 4'' einen Vorsprung 35 auf, der in die Hinterschneidung 31 eingreift.

Auch so wird durch die Stützung eine Verstärkung ausgebildet. Weitere Mechanismen zum Formschluss sind möglich.

Die Kunststoffplatte 21^{II} ragt über die äußere Oberfläche 33 des Stützkörpers 30 hinaus, so dass seine Oberfläche 4'' eine Kontaktfläche darstellen kann.

In Figur 6, vorzugsweise ausgehend von Figur 3 oder von Figur 4 ist dargestellt, wie eine Kunststoffplatte mit dem Stützkörper 30 befestigt werden kann und auch so das elastische Modul der Gleitlagersegmente 1^{I}, 1^{II} bzw. der Kunststoffplatten 21^{II} verstärkt werden kann.

Dies erfolgt durch Bolzen, also bspw. einfache Stifte ohne Gewinde oder Schrauben 43, als Verstärkungselemente, die fest im Stützkörper 30 verankert sind oder werden und in das Volumen der Kunststoffplatte 21^{I}, 21^{III}, 21^{IV}, 21^{V} hineingreifen. Dies kann hier vorzugsweise von der Rückseite 34 des Stützkörpers 30 her erfolgen.

Die Eindringtiefe der Bolzen oder Schrauben 43 in die Kunststoffplatte 21^{III} sowie Anordnung und Anzahl der Bolzen oder Schrauben 43 kann variieren.

Dies stellt eine Arretierungsfunktion der Stifte/Bolzen dar sowie auch ein Verstärkungseffekt.

Dabei kann die Kunststoffplatte 21^{III} auch zusätzlich mit der Hinterschneidung 31 (Fig. 4, 5) am Stützkörper 30 gestützt sein.

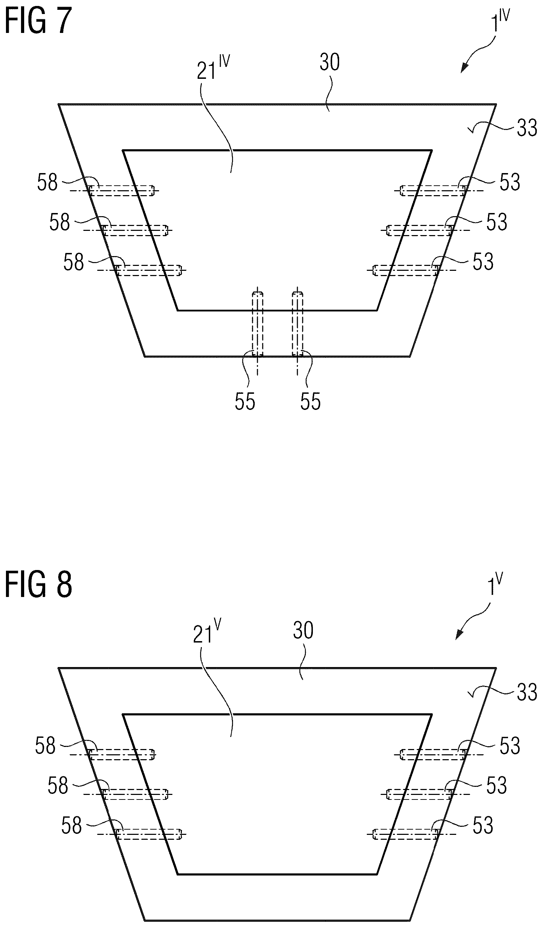

In Figur 7 ist ausgehend von Figur 3 oder Figur 4, aber auch ausgehend von Figur 2 dargestellt, wie durch Bolzen oder Schrauben 53, 55 oder 58 eine Kunststoffplatte 21^{IV} in dem Stützkörper 30 in Position zu halten und auch zu befestigen und in ihrem Elastizitätsmodul zu verstärken ist.

Dies erfolgt hier vorzugsweise von drei Seiten der Kunststoffplatte 21^{IV}, kann aber auch selektiv nur von einer oder zwei2 Seiten erfolgen. So sind beispielsweise in einem Ausführungsbeispiel Stifte 53, 55, 58 von drei Seiten vorhanden und in einem weiterem Ausführungsbeispiel sind nur die Stifte 53, 58 von zwei Seiten vorhanden (Fig 8).

Dies stellt eine Arretierungsfunktion der Stifte/Bolzen dar sowie auch ein Verstärkungseffekt.

Ebenso kann mittels des Bolzens 43 (Fig. 6), 53, 55, 58 (Fig. 7, 8) eine Temperaturmessung erfolgen.

Die Kunststoffplatte 21^{IV}, 21^{V} oder der Stützkörper 30 kann auch eine Vertiefung aufweisen, über die Öl zugeführt wird (LEG Design).

Ebenso ist die Art der Verstärkung oder Stützung gemäß Figuren 2 bis 8 nicht nur bei Radiallagern oder Axiallagern anwendbar, sondern auch für feste Segmentlager möglich.

In den Beispielen gemäß Figur 3, 4, 6, 7 und 8 kann auch eine Kunststoffplatte 21^{I} gemäß Figur 2 verwendet werden.

## Patentansprüche

1. Gleitlagersegment (1^{I}, 1^{II}, 1^{III}, 1^{IV}, 1^{V} )
für ein Gleitlager,
das eine Kunststoffplatte (21^{I}, 21^{II}, 21^{III}, 21^{IV}, 21^{V}) aufweist,
das zumindest ein Verstärkungselement (10, 13; 31, 35; 43, 53, 55, 58) aufweist
zur Verstärkung oder zu Arretierung,
bei dem der Stützkörper (30) eine Vertiefung und eine Hinterschneidung (31) aufweist,
in die ein Vorsprung (35) einer Kunststoffplatte (21^{II}, 21^{III}, 21^{IV}, 21^{V}) eingreifen kann..

2. Gleitlagersegment nach Anspruch 1,
bei dem die Verstärkungselemente (10, 13; 31, 35; 43, 53, 55, 58) aus Stahl sind.

3. Gleitlagersegment nach einem oder beiden der Ansprüche 1 oder 2,
bei dem Längs-Verstärkungsstäbe (10) und/oder quer dazu, insbesondere 90° dazu,
Quer-Verstärkungsstäbe (13) in der Kunststoffplatte (21^{I}, 21^{II}, 21^{III}, 21^{IV}, 21^{V}) vorhanden sind,
und sich dort über die jeweilige Breite oder Länge insbesondere vollständig erstrecken.

4. Gleitlagersegment nach einem oder mehreren der Ansprüche 1, 2 oder 3,
bei dem die Kunststoffplatte (21^{II}, 21^{III}, 21^{IV}, 21^{V}) in einem Stützkörper (30) gestützt und/oder befestigt ist.

5. Gleitlagersegment nach Anspruch 4,
bei dem der Stützkörper (30) Stahl aufweist, insbesondere aus Stahl besteht.

6. Gleitlagersegment nach einem oder mehreren der vorherigen Ansprüche,
bei dem das Gleitlagersegment (1^{I}, 1^{II}, 1^{III}, 1^{IV}, 1^{V}) und/oder die Kunststoffplatte (21^{II}, 21^{III}, 21^{IV}, 21^{V}) trapezförmig ausgebildet ist.

7. Gleitlagersegment nach einem oder mehreren der Ansprüche 4 oder 5,
bei dem die Kunststoffplatte (21^{I}, 21^{II}, 21^{III}, 21^{IV}, 21^{V}) durch Bolzen oder Schrauben (43) als Verstärkungselemente, die durch den Stützkörper (30) hindurchgreifen,
am Stützkörper (30) befestigt und verstärkt ist.

8. Gleitlagersegment nach Anspruch 7,
bei dem die Bolzen und Schrauben (43) von der Rückseite (32) des Stützkörpers (30) in die Kunststoffplatte (21^{II}, 21^{III}, 21^{IV}, 21^{V}) hineingreifen.

9. Gleitlagersegment nach einem oder beiden der Ansprüche 7 oder 8,
bei dem die Bolzen und Schrauben (53, 55, 58) von zumindest einer Seitenfläche des Stützkörpers (30) in die Kunststoffplatte (21^{II}, 21^{III}, 21^{IV}, 21^{V}) hineingreifen.

10. Gleitlagersegment nach einem oder mehreren der Ansprüche 1, 2, 3, 4, 5, 6, 7, 8 oder 9,
bei dem ein Kunststoff aus PEEK verwendet wird.

11. Gleitlagersegment nach einem oder mehreren der Ansprüche 1, 2, 3, 4, 5, 6, 7, 8 oder 10,
bei dem die Verstärkungselement (10, 13; 31, 35; 43, 53, 55, 58) einen Durchmesser von 1mm bis 2mm aufweisen.

12. Gleitlager,
insbesondere ein Axiallager,
das ein Gleitlagersegment gemäß einem oder mehreren der Ansprüche 1 bis 11 aufweist.

13. Gleitlager nach Anspruch 12,
bei dem die Kunststoffplatte (21^{I}, 21^{II}, 21^{III}, 21^{IV}, 21^{V}) oder
der Stützkörper (30)
eine Vertiefung aufweisen, über die Öl zugeführt wird.
